# EUROPEAN PATENT APPLICATION

(11) **EP 4 459 594 A1**
(43) Date of publication of application: **06.11.2024**
(21) Application number: 24170959.1
(22) Date of filing: 18.04.2024
(51) Int. Cl.: G08G 1/16, G06V 20/58, G08G 1/09, G08G 1/0967

(54) **METHOD FOR DETERMINING ROAD CONDITIONS BY SHARING SENSOR DATA AND OBJECT RECOGNITION RESULTS IN V2X COMMUNICATION ENVIRONMENT**

(30) Priority: 21.04.2023 KR 20230052736
(71) Applicant: Korea Electronics Technology Institute, Bundang-gu, Seongnam-si Gyeonggi-do 13509 (KR)
(72) Inventor: AN, Byoung Man, 13587 Seongnam-si, Gyeonggi-do (KR); YOON, Sang Hun, 13589 Seongnam-si, Gyeonggi-do (KR); JANG, Seong Hyun, 16843 Yongin-si, Gyeonggi-do (KR); SHIN, Dae Kyo, 13567 Seongnam-si, Gyeonggi-do (KR); JANG, Soo Hyun, 16825 Yongin-si, Gyeonggi-do (KR); JANG, Jun Hyek, 16002 Uiwang-si, Gyeonggi-do (KR); LIM, Ki Taeg, 16707 Suwon-si, Gyeonggi-do (KR)
(74) Representative: Isarpatent

(57) **Abstract**

There is provided a method for determining road conditions by sharing sensor data and object recognition results in a V2X communication environment. According to an embodiment, a road condition determination method may acquire sensor data, may recognize objects by analyzing the acquired sensor data, may receive sensor data and object recognition results from external terminals, may determine reliability on the received object recognition results and sensor data, and may determine road conditions, based on the acquired sensor data and object recognition results and object recognition results and sensor data which are given reliability. Accordingly, road conditions may be exactly determined by sharing sensor data and object recognition results in a V2X environment, so that autonomous driving performance may be enhanced, and it is determined whether sensor data and object recognition results received from an outside are utilized in determining road conditions, by determining reliability on the sensor data and the object recognition results, so that accuracy of determination of road conditions may be more enhanced.

## Description

### BACKGROUND

### FIELD

The disclosure relates to autonomous driving control based on vehicle to everything (V2X), and more particularly, to a method for determining road conditions by sharing information in a V2X communication environment and controlling driving of a vehicle.

### DESCRIPTION OF RELATED ART

In related-art autonomous driving, vehicles may recognize and determine objects by using their own sensors and algorithms, and analyze object information and conditions of objects. In a communication environment such as wireless access in vehicular environment (WAVE), long term evolution (LTE), there is a limit to sharing data of high-capacity, low-latency, and thus, there is a limit to recognizing objects in real time and determining conditions by using information transmitted from other vehicles or surrounding infrastructures.

Since vehicles recognize and determine objects in their respective methods, results of recognizing/determining may vary by vehicles, and a specific vehicle may erroneously recognize/determine.

For example, when the traffic lights changes to red, a preceding vehicle recognizes/determines information of the corresponding traffic light and stops, but a following vehicle may not see the information of the traffic light because it is occluded by the preceding vehicle and may recognize/determine that a distance to the preceding vehicle decreases since the preceding vehicle stops, and may decelerate.

### SUMMARY

The disclosure has been developed in order to solve the above-described problems, and an object of the disclosure is to provide a method for determining road conditions by sharing sensor data and object recognition results in a V2X environment.

To achieve the above-described object, a road condition determination method according to an embodiment of the disclosure may include: a step of acquiring sensor data; a step of recognizing objects by analyzing the acquired sensor data; a step of receiving sensor data and object recognition results from external terminals; a first determination step of determining reliability on the received object recognition results; a second determination step of determining reliability on the received sensor data; and a third determination step of determining road conditions, based on the sensor data acquired at the step of acquiring, object recognition results acquired at the step of recognizing, object recognition results given reliability at the first determination step, and sensor data given reliability at the second determination step.

The external terminals may include a terminal of a surrounding vehicle, an infrastructure, a pedestrian terminal. The step of receiving may include receiving sensor data and object recognition results from surrounding terminals through V2X communication.

The first determination step may include: a step of measuring a reception delay time of an object recognition result; and a step of imparting reliability to the object recognition result when the measured delay time is less than or equal to a threshold value. The step of imparting the reliability may include: a step of identifying an object recognition rate of an external terminal that transmits the object recognition result when the measured delay time is less than or equal to the threshold value; and a step of imparting reliability to the object recognition result when the identified object recognition rate is greater than or equal to a threshold value. At the step of imparting the reliability, when the identified object recognition rate is less than the threshold value, reliability may not be imparted to the object recognition result. At the first determination step, when the measured delay time exceeds the threshold value, reliability may not be imparted to the object recognition result.

The second determination step may include: a step of measuring a reception delay time of sensor data; and a step of imparting reliability to the sensor data when the measured delay time is less than or equal to a threshold value. At the step of imparting the reliability, when the measured delay time exceeds the threshold value, reliability may not be imparted to the sensor data.

According to another embodiment of the disclosure, a road condition determination system may include: an acquisition unit configured to acquire sensor data; a recognition unit configured to recognize objects by analyzing the acquired sensor data; a reception unit configured to receive sensor data and object recognition results from external terminals; a first determination unit configured to determine reliability on the received object recognition results; a second determination unit configured to determine reliability on the received sensor data; and a third determination unit configured to determine road conditions, based on the sensor data acquired by the acquisition unit, object recognition results acquired by the recognition unit, object recognition results given reliability by the first determination unit, and sensor data given reliability by the second determination unit.

According to still another embodiment of the disclosure, a road condition determination method may include: a step of receiving sensor data and object recognition results from external terminals; a step of determining reliability on the received sensor data and object recognition results; a step of determining road conditions, based on sensor data which is internally acquired, object recognition results which are internally acquired, and sensor data and object recognition results which are given reliability at the step of determining; and a step of controlling driving of a vehicle based on the determined road conditions.

According to yet another embodiment of the disclosure, a road condition determination system may include: a reception unit configured to receive sensor data and object recognition results from external terminals; a first determination unit configured to determine reliability on the received sensor data and object recognition results; a second determination unit configured to determine road conditions, based on sensor data which is internally acquired, object recognition results which are internally acquired, and sensor data and object recognition results which are given reliability by the first determination unit; and a control unit configured to control driving of a vehicle based on the determined road conditions.

As described above, according to embodiments of the disclosure, road conditions may be exactly determined by sharing sensor data and object recognition results in a V2X environment, so that autonomous driving performance may be enhanced.

According to embodiments of the disclosure, it is determined whether sensor data and object recognition results received from an outside are utilized in determining road conditions, by determining reliability on the sensor data and the object recognition results, so that accuracy of determination of road conditions may be more enhanced.

Other aspects, advantages, and salient features of the invention will become apparent to those skilled in the art from the following detailed description, which, taken in conjunction with the annexed drawings, discloses exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a view illustrating a V2X communication environment to which embodiments of the disclosure are applicable;
FIG. 2 is a view illustrating a detailed configuration of an autonomous vehicle terminal;
FIG. 3 is a view illustrating a method for determining reliability on an object recognition result received from an outside;
FIG. 4 is a view illustrating a method for determining reliability on sensor data received from an outside;
FIG. 5 is a view illustrating an example of vehicle control using information shared through V2X; and
FIG. 6 is a view illustrating enhancement of a road usage rate achieved by reduction of an inter-vehicle distance using reliability determination.

### DETAILED DESCRIPTION

Hereinafter, the disclosure will be described in more detail with reference to the accompanying drawings.

Embodiments of the disclosure provide a method for determining road conditions by sharing sensor data and object recognition results in a V2X communication environment.

In embodiments of the disclosure, V2X communication may include vehicle to vehicle (V2V) communication, vehicle to infra (V2I) communication, vehicle to pedestrian (V2P) communication, vehicle to cloud (V2C) communication. In addition, V2X communication may be applied to WAVE, LTE, 5G-Uu, 5G-NR-V2X, 6G, and other communication methods.

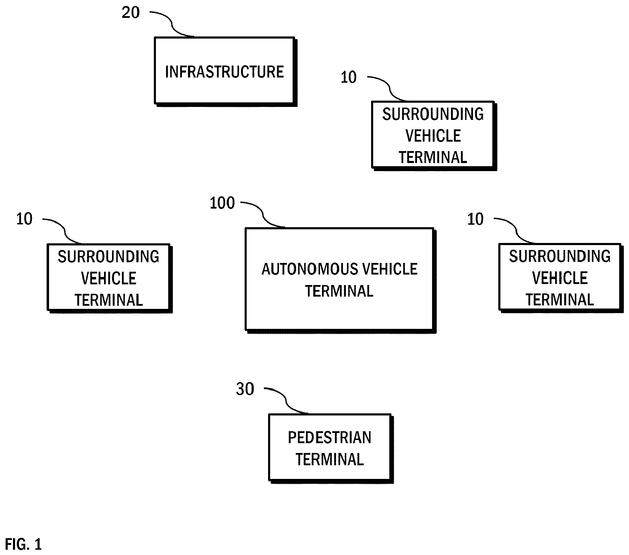

FIG. 1 is a view illustrating a V2X communication environment to which embodiments of the disclosure are applicable. As shown in FIG. 1, the V2X communication environment to which embodiments of the disclosure are applicable may be established by connecting an autonomous vehicle terminal 100, surrounding vehicle terminals 10, an infrastructure 20, and a pedestrian terminal 30 with one another through V2X communication.

In an embodiment of the disclosure, the autonomous vehicle terminal 100 may be a V2X terminal for controlling a vehicle by sharing information with surrounding vehicle terminals 10, 20, 30.

The surrounding vehicle terminals 10 are V2X terminals that are installed in vehicles positioned around the autonomous vehicle terminal 100. The surrounding vehicle terminals 10 may also control vehicles by sharing information in common with the autonomous vehicle terminal 100, but in embodiments of the disclosure, controlling a vehicle by sharing information is limited to the autonomous vehicle terminal 100.

The infrastructure 20 may include a signal controller, a road side unit (RSU) which controls traffic-related information to other terminals 10, 30, 100 on a road, an intersection. The pedestrian terminal 30 may be a terminal that is carried by a pedestrian and may have an application for V2X communication installed therein.

The number of surrounding vehicle terminals 10, the number of infrastructures 20, the number of pedestrian terminals 30 in FIG. 1 are examples, and in general, there may be a larger number of vehicles, infrastructures, pedestrian terminals than illustrated in FIG. 1.

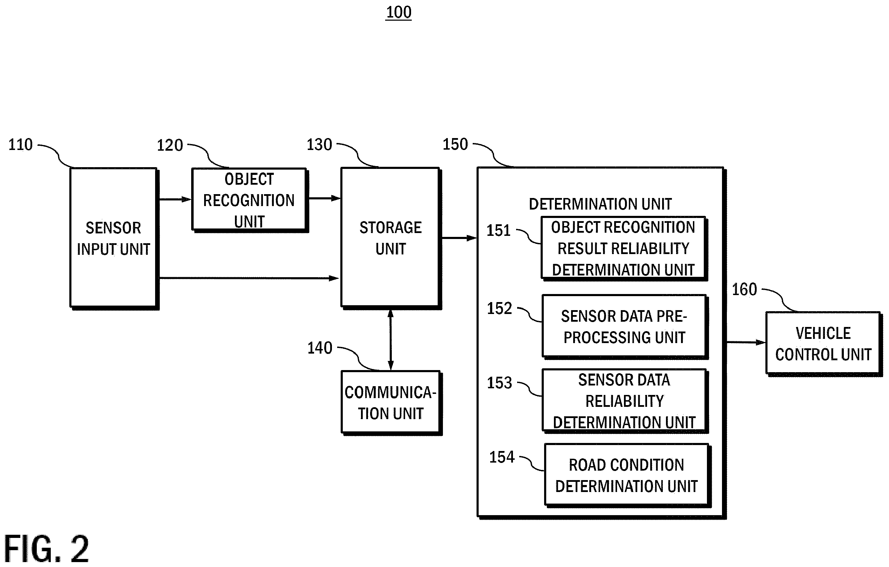

FIG. 2 is a view illustrating a detailed configuration of the autonomous vehicle terminal 100 shown in FIG. 1. As shown in FIG. 2, the autonomous vehicle terminal 100 may include a sensor input unit 110, an object recognition unit 120, a storage unit 130, a communication unit 140, a determination unit 150, and a vehicle control unit 160.

The sensor input unit 110 may be configured to receive sensor data which is generated by sensing a surrounding environment by using sensors mounted in the vehicle 100. The sensors may include a camera, a LiDAR, a Radar, or the like.

The object recognition unit 120 may detect objects by analyzing sensor data inputted through the sensor input unit 110, and may recognize and classify the detected objects. Objects to be recognized may include surrounding vehicles, persons, animals, buildings, traffic lights, pedestrians.

The storage unit 130 may store sensor data which is inputted through the sensor input unit 110, and object recognition results which are obtained by the object recognition unit 120.

The communication unit 140 may transmit sensor data and object recognition results which are stored in the storage unit 130 to surrounding vehicle terminals 10, an infrastructure 20, and a pedestrian terminal 30.

In addition, the communication unit 140 may receive sensor data and object recognition results from the surrounding vehicle terminals 10, the infrastructure 20, and the pedestrian terminal 30. The received sensor data and object recognition results may be stored in the storage unit 130.

The determination unit 150 may include an object recognition result reliability determination unit 151, a sensor data pre-processing unit 152, a sensor data reliability determination unit 153, and a road condition determination unit 154 as shown in FIG. 2.

The object recognition result reliability determination unit 151 may determine reliability on an object recognition result which is received from an outside (the surrounding vehicle terminals 10, the infrastructure 20, the pedestrian terminal 30) and stored in the storage unit 130.

The sensor data pre-processing unit 152 may perform pre-processing with respect to sensor data which is stored in the storage unit 130. The sensor data reliability determination unit 153 may determine reliability on sensor data that is received from an outside among sensor data pre-processed by the sensor data pre-processing unit 152.

The road condition determination unit 154 may determine road conditions, based on 1) an object recognition result which is generated inside the vehicle in which the autonomous vehicle terminal 100 is installed, 2) an object recognition result which is received from an outside and determined as having reliability by the object recognition result reliability determination unit 151, 3) sensor data which is generated inside the vehicle, and 4) sensor data which is received from an outside and determined as having reliability by the sensor data reliability determination unit 153.

The vehicle control unit 160 may control driving of the vehicle, based on road conditions determined by the road condition determination unit 154.

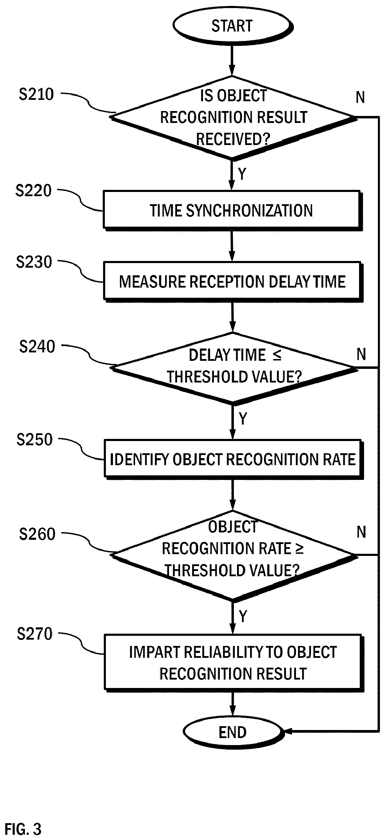

Hereinafter, a method for determining reliability on an object recognition result received from an outside will be described in detail with reference to FIG. 3.

As shown in FIG. 3, when an object recognition result is received from an outside (S210-Y), the object recognition result reliability determination unit 151 may perform time synchronization between the autonomous vehicle terminal 100 and an external terminal 10, 20, 30 which transmits the object recognition result (S220), and may measure a reception delay time (t_{L}) (S230). Time synchronization at step S220 may be performed with reference to a precise positioning system (PPS) value of a global positioning system (GPS) receiver.

When the delay time (t_{L}) measured at step S230 exceeds a threshold value (tₜₕ), for example, 3 ms (S240-N), the object recognition result reliability determination unit 151 does not impart reliability to the object recognition result received from the corresponding external terminal 10, 20, 30. Accordingly, the object recognition result received from the corresponding external terminal 10, 20, 30 may not be utilized.

On the other hand, when the delay time (t_{L}) measured at step S230 is less than or equal to the threshold value (tₜₕ) (S240-Y), the object recognition result reliability determination unit 151 may identify an object recognition rate (Pr) of the corresponding external terminal 10, 20, 30 (S250).

The object recognition rate (Pr) may be received from the corresponding external terminal 10, 20, 30 and may be identified. As performance of a sensor is more excellent and performance of an object recognition model is more excellent, the object recognition rater of the external terminal 10, 20, 30 may be higher.

When the object recognition rate (Pr) identified at step S250 is less than a threshold value (Pₜₕ), for example, 90% (S260-N), the object recognition result reliability determination unit 151 may not impart reliability to the object recognition result received from the corresponding external terminal 10, 20, 30. Accordingly, the object recognition result received from the corresponding external terminal 10, 20, 30 may not be utilized.

On the other hand, when the object recognition rate (Pr) identified at step S250 is greater than or equal to the threshold value (Pₜₕ) (S260-Y), the object recognition result reliability determination unit 151 may impart reliability to the object recognition result received from the corresponding external terminal 10, 20, 30 (S270).

The object recognition result received from the external terminal 10, 20, 30 and given reliability may be utilized for the road condition determination unit 154 to determine road conditions.

When there are a plurality of external terminals 10, 20 30 that have the object recognition rate (Pr) greater than or equal to the threshold value, only the object recognition result of the external terminal 10, 20, 30 that has the highest object recognition rate (Pr) may be utilized.

Furthermore, when the object recognition rates of the plurality of external terminals 10, 20, 30 are the same or have equal levels, an object recognition result that is received from an external terminal 10, 20, 30 close to the autonomous vehicle terminal 100 may be utilized as an object recognition result for grasping an unexpected situation. A distance between the autonomous vehicle terminal 100 and the external terminal 10, 20, 30 may be calculated by utilizing position information received from the external terminal 10, 20, 30.

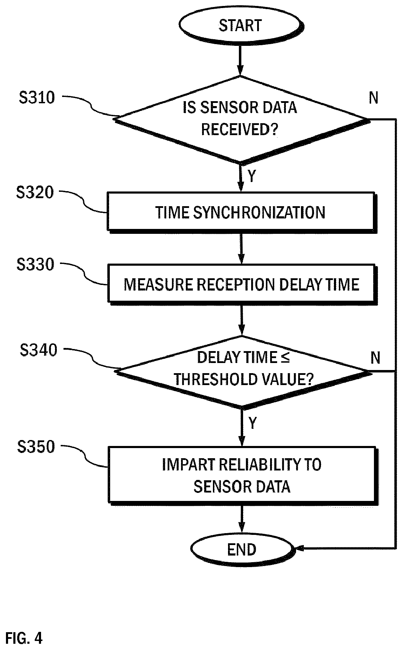

Hereinafter, a method for determining reliability on sensor data received from an outside will be described in detail with reference to FIG. 4.

As shown in FIG. 4, when sensor data is received from an outside (S310-Y), the sensor data pre-processing unit 152 may perform pre-processing, such as data cleaning, integration, transformation, reduction, discretizing, descriptive characteristics mining, etc., with respect to the received sensor data (S320).

The sensor data reliability determination unit 153 may measure a reception delay time (t_{L}) of sensor data (S330).

When the delay time (t_{L}) measured at step S330 exceeds a threshold value (tₜₕ), for example, 3 ms (S340-N), the sensor data reliability determination unit 153 may not impart reliability to the sensor data received from the corresponding external terminal 10, 20, 30. Accordingly, the sensor data received from the corresponding external terminal 10, 20, 30 may not be utilized.

On the other hand, when the delay time (t_{L}) measured at step S330 is less than or equal to the threshold value (tₜₕ) (S340-Y), the sensor data reliability determination unit 153 may impart reliability to the sensor data received from the corresponding external terminal 10, 20, 30 (S350).

The sensor data received from the external terminal 10, 20, 30 and given reliability may be utilized for the road condition determination unit 154 to determine road conditions.

When there are a plurality of external terminals 10, 20, 30 that have the reception delay time (t_{L}) less than or equal to the threshold value, only sensor data of an external terminal 10, 20, 30 that has the shortest delay time (t_{L}) may be utilized.

Furthermore, when the reception delay times (t_{L}) of the plurality of external terminals 10, 20, 30 are the same or have equal levels, sensor data received from an external terminal 10, 20, 30 that is close to the autonomous vehicle terminal 100 may be utilized.

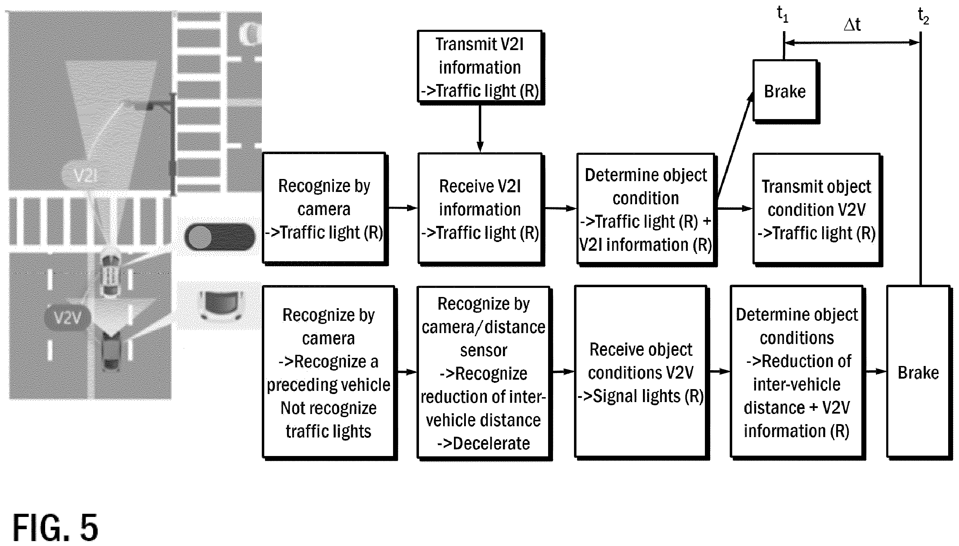

FIG. 5 illustrates an application example of controlling autonomous vehicles according to the above-described embodiments. In the application example of FIG. 5, a preceding vehicle stops at a four-way intersection by using a traffic light recognition result and traffic light information received from a signal controller through V2I, and a following vehicle does not recognize traffic lights because traffic lights are occluded by the preceding vehicle, but recognizes reduction in a distance to the preceding vehicle and recognizes a signal through traffic light information received from the preceding vehicle through V2V and stops.

The above application example may be applied when vehicles move off. For example, when vehicles move off after waiting at traffic lights, following vehicles except for the preceding vehicle may not see traffic lights. Even in this case, the following vehicles may receive signal information from the preceding vehicle through V2V and recognize the same, and may move off. In this case, when the following vehicles move off one after another after waiting at traffic lights, as many vehicles as possible may pass within the time of the green light, so that the smooth flow of traffic and energy saving may be achieved, and autonomous driving may be systematically performed.

In the above-described embodiments, as a threshold value of a reception delay time used to impart reliability, an appropriate value should be applied according to a situation of an application service because a time between t1 and t2 in FIG. 5 may increase or decrease.

When autonomous vehicles are controlled according to the above-described embodiments, a road usage rate may increase. In related-art V2X methods, information obtained by an ego-vehicle is mostly used, but in the above-described embodiments, results of determining reliability on corresponding information are reflected when information received from surrounding vehicles, infrastructures are utilized.

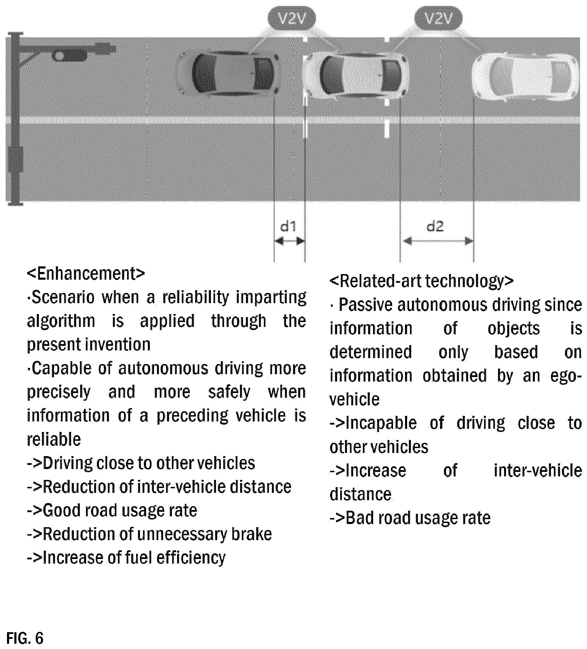

For example, when a distance between vehicles is d1 as shown in FIG. 6, reliability may be imparted to the preceding vehicle, and reliable data which is similar to a result of determining by an ego-vehicle or has an equal level therewith may be continuously received. In this situation, the ego-vehicle may rely on the preceding vehicle and thus may perform autonomous deriving close to the preceding vehicle, and accordingly, it may be expected that a distance between vehicles is reduced, and a road usage rate becomes better.

Up to now, a method for determining road conditions by sharing sensor data and object recognition results in a V2X communication environment has been described in detail with reference to preferred embodiments.

In related-art technologies, vehicles may perform autonomous driving by recognizing and determining objects by using their respective sensors and algorithms and analyzing object information and conditions of objects. Since vehicles recognize and determine objects in their respective methods, results of recognizing/determining may vary by vehicles, and a specific vehicle may erroneously recognize/determine. For example, when the traffic lights change to red, a preceding vehicle may recognize/determine information of the corresponding traffic lights and may stop by braking, but, when information of the traffic lights is occluded by the preceding vehicle and is not seen, a following vehicle may decelerate and may brake by recognizing/determining that a distance to the preceding vehicle is reduced since the preceding vehicle stops.

In embodiments of the disclosure, to solve the problem of related-art technology in the same situation, a preceding vehicle may transmit information on a change in conditions (a change in traffic lights) of an object recognized/determined to a following vehicle through V2X communication. Accordingly, when the following vehicle receives condition information of the object transmitted from the preceding vehicle, the following vehicle may synthesize condition/recognition information of the object determined by itself, and condition information of the preceding object that is not determined since it is occluded, and may compare the synthesized information with information that is recognized only by its own sensor, and utilize the information, so that surrounding conditions may be more exactly recognized and the vehicle may brake more rapidly than in related-art technology.

The technical concept of the disclosure may be applied to a computer-readable recording medium which records a computer program for performing the functions of the apparatus and the method according to the present embodiments. In addition, the technical idea according to various embodiments of the disclosure may be implemented in the form of a computer readable code recorded on the computer-readable recording medium. The computer-readable recording medium may be any data storage device that can be read by a computer and can store data. For example, the computer-readable recording medium may be a read only memory (ROM), a random access memory (RAM), a CD-ROM, a magnetic tape, a floppy disk, an optical disk, a hard disk drive, or the like. A computer readable code or program that is stored in the computer readable recording medium may be transmitted via a network connected between computers.

In addition, while preferred embodiments of the present disclosure have been illustrated and described, the present disclosure is not limited to the above-described specific embodiments. Various changes can be made by a person skilled in the at without departing from the scope of the present disclosure claimed in claims, and also, changed embodiments should not be understood as being separate from the technical idea or prospect of the present disclosure.

## Claims

1. A method for determining road conditions, the method comprising:
a step of acquiring sensor data;
a step of recognizing objects by analyzing the acquired sensor data;
a step of receiving sensor data and object recognition results from external terminals;
a first determination step of determining reliability on the received object recognition results;
a second determination step of determining reliability on the received sensor data; and
a third determination step of determining road conditions, based on the sensor data acquired at the step of acquiring, object recognition results acquired at the step of recognizing, object recognition results given reliability at the first determination step, and sensor data given reliability at the second determination step.

2. The method of claim 1, wherein the external terminals comprise a terminal of a surrounding vehicle, an infrastructure, a pedestrian terminal.

3. The method of claim 2, wherein the step of receiving comprises receiving sensor data and object recognition results from surrounding terminals through V2X communication.

4. The method of claim 1, wherein the first determination step comprises:
a step of measuring a reception delay time of an object recognition result; and
a step of imparting reliability to the object recognition result when the measured delay time is less than or equal to a threshold value.

5. The method of claim 4, wherein the step of imparting the reliability comprises:
a step of identifying an object recognition rate of an external terminal that transmits the object recognition result when the measured delay time is less than or equal to the threshold value; and
a step of imparting reliability to the object recognition result when the identified object recognition rate is greater than or equal to a threshold value.

6. The method of claim 5, wherein, at the step of imparting the reliability, when the identified object recognition rate is less than the threshold value, reliability is not imparted to the object recognition result.

7. The method of claim 4, wherein, at the first determination step, when the measured delay time exceeds the threshold value, reliability is not imparted to the object recognition result.

8. The method of claim 1, wherein the second determination step comprises:
a step of measuring a reception delay time of sensor data; and
a step of imparting reliability to the sensor data when the measured delay time is less than or equal to a threshold value.

9. The method of claim 8, wherein, at the step of imparting the reliability, when the measured delay time exceeds the threshold value, reliability is not imparted to the sensor data.

10. A road condition determination system comprising:
an acquisition unit configured to acquire sensor data;
a recognition unit configured to recognize objects by analyzing the acquired sensor data;
a reception unit configured to receive sensor data and object recognition results from external terminals;
a first determination unit configured to determine reliability on the received object recognition results;
a second determination unit configured to determine reliability on the received sensor data; and
a third determination unit configured to determine road conditions, based on the sensor data acquired by the acquisition unit, object recognition results acquired by the recognition unit, object recognition results given reliability by the first determination unit, and sensor data given reliability by the second determination unit.

11. A vehicle control method comprising:
a step of receiving sensor data and object recognition results from external terminals;
a step of determining reliability on the received sensor data and object recognition results;
a step of determining road conditions, based on sensor data which is internally acquired, object recognition results which are internally acquired, and sensor data and object recognition results which are given reliability at the step of determining; and
a step of controlling driving of a vehicle based on the determined road conditions.
